# EUROPEAN PATENT APPLICATION

(11) **EP 1 341 108 A2**
(43) Date of publication of application: **03.09.2003**
(21) Application number: 02255263.2
(22) Date of filing: 26.07.2002
(51) Int. Cl.: G06F 17/60

(54) **Auction system**

(30) Priority: 28.02.2002 JP 2002054079
(71) Applicant: FUJITSU LIMITED, Kawasaki-shi, Kanagawa 211-8588 (JP)
(72) Inventor: Itagaki, Hajime, Fujitsu Hokkaido Systems Eng. Ltd, Sapporo-shi, Hokkaido 004-8550 (JP); Monzaki,Hiroki, Fujitsu Hokkaido Systems Eng. Ltd, Sapporo-shi, Hokkaido 004-8550 (JP); Yokota, Yoichi, Fujitsu Hokkaido Systems Eng. Ltd, Sapporo-shi, Hokkaido 004-8550 (JP)
(74) Representative: Mohun, Stephen John

(57) **Abstract**

By receiving a plurality of pieces of program information from program providers (1) looking for sponsors broadcasting the plurality of pieces of program information as an auction program simultaneously (by thumbnail display or frame-by-frame forwarding), making viewers notify an auction program provider (2) of programs they find interesting and notifying the sponsors (4) of the audience rating of each program in real time, an auction program provider device (2), a sponsor selection method and a sponsor selection program can be provided such that each sponsor (4) can become the sponsor of a program in which the target customers of the sponsor match the viewers of the program.

## Description

The present invention relates to an auction program provider device, a sponsor selection method and a sponsor selection program. Together they select the sponsor of a broadcast program by broadcasting a sponsor auction in real time utilizing an interactive TV system and publishing the program's audience-rating information.

In the prior art, in order to determine the sponsor of a TV program, first, a candidate corporation that might be interested in becoming the sponsor was looked for, the content draft of the program was shown to the sponsor candidate and after obtaining approval, the final content was determined according to the intentions of the sponsor.

Then, the program with the pre-determined content was broadcast and after broadcasting the audience rating was given to the sponsor.

However, in the known method described above, since it is difficult for a sponsor to estimate the audience rating of a program before actual broadcasting it and there is significant risk in such an investment (high investment risk), the investment return was not clear, which was a problem.

Although after broadcasting, sponsors can find out the audience rating, information about the viewers, such as their gender, age, locality, job, etc. was not clear to the sponsors, which was another problem.

It is also difficult for a program producer to look for a sponsor. Since the intentions of a selected sponsor must be reflected in the program, there are restrictions on the contents. Therefore, the program producers frequently complained that they could not freely produce their programs, which was another problem.

Embodiments of the present invention aim to provide an auction program provider device, a sponsor selection method and a sponsor selection program that enable a sponsoring corporation to match the viewers of a program to the target customers of the corporation by obtaining information about the number, gender, age, locality, job, etc. of the viewers-to-be of the program prior to its broadcast (or re-broadcast).

The auction program provider device of the present invention broadcasts a TV program through a first network and receives information from viewer terminals receiving the program through a second network. The device comprises an aggregate program production unit, an aggregate program broadcasting unit, a program selection unit, a program broadcasting unit, a viewer information collection unit, a viewer information retrieval unit, a retrieval result output unit, a bid reception unit, an auction unit, a program collection unit and a bid information output unit.

In embodiments of the present invention, the aggregate program production unit produces an aggregate broadcast displaying the respective pictures of a plurality of TV broadcasts on one screen in parallel.

The aggregate program broadcasting unit broadcasts the aggregate program produced by the aggregate program production unit.

The program selection unit selects an arbitrary TV broadcast from a plurality of TV programs according to the instruction of the viewer terminal.

The program broadcasting unit broadcasts the TV program selected by the program selection unit.

The viewer information collection unit obtains viewer information corresponding to the viewer terminal from a viewer master table storing viewer information and stores the viewer information in a program viewer number table in relation to information about the program selected.

The viewer information retrieval unit retrieves viewer information corresponding to a desired TV program from the program viewer number table according to the retrieval instruction of an external terminal.

The retrieval result output unit outputs the viewer information retrieved by the viewer information retrieval unit to an external terminal.

The bid reception unit receives a bid from the external terminal of the desired TV program and stores the bid information in a bid information database.

The auction unit holds an auction according to the bid information stored in the bid information database and determines a winning external terminal.

In a second embodiment of the present invention, the program collection unit collects TV programs from program provider terminals and stores the programs in a program database.

The aggregate program production unit produces an aggregate program displaying the respective pictures of a plurality of the TV broadcasting programs collected by the program collection unit on one screen in parallel.

The aggregate program broadcasting unit broadcasts the aggregate program produced by the aggregate program production unit.

The program selection unit selects an arbitrary TV program from the plurality of programs according to the instruction of the viewer terminal.

The program broadcasting unit broadcasts the TV program selected by the program selection unit.

The viewer information collection unit obtains viewer information corresponding to the viewer terminal from the viewer master table storing viewer information and stores the information in a program viewer number table in relation to information about the TV program selected.

The viewer information retrieval unit retrieves viewer information corresponding to a desired TV program from the program viewer number table according to the retrieval instruction of an external terminal.

The retrieval result output unit outputs the viewer information retrieved by the viewer information retrieval unit to the external terminal.

The bid reception unit receives the bid of the desired TV program from the external terminal.

The bid information output unit outputs the bid information received by the bid reception unit, to the program provider terminal.

A sponsor is found using an interactive TV system. In the system, program information is provided by program providers looking for sponsors and simultaneously a plurality of pieces of program information are broadcast as an auction program (by thumbnail display or frame-by frame forwarding) . Then, programs in which viewers are inrerested are brought to the attention of an auction program producer , and the audience rating of each program is delivered to candidate sponsors in real time.

Information about viewers is stored in advance and when the audience rating of each program is delivered to the candidate sponsors, it is sorted and is collectively provided.

Upon receipt of the audience rating and the information, the candidate sponsor decides whether it should become a sponsor. If it decides to become a sponsor, the sponsorship of the program is auctioned off between candidate sponsors on the spot.

The auction program producer obtains bid information from each candidate sponsor in real time and selects the candidate sponsor that bids the highest price as the program's sponsor.

In other words, according to the present invention, an auction program intermediates viewer information between a program provider and sponsor candidates and provides the program provider with a sponsor.

Specifically, according to one aspect of the present invention, the auction program provider device of the present invention broadcasts a TV program through a first network and receives information from viewer terminals receiving the program through a second network. The device comprises an aggregate program production unit producing an aggregate program displaying the respective pictures of a plurality of TV programs on one screen in parallel; an aggregate program broadcasting unit broadcasting the aggregate program produced by the aggregate program production unit; a program selection unit selecting an arbitrary TV program from the plurality of TV programs according to the instruction of the viewer terminal; a program broadcasting unit broadcasting the TV program selected by the program selection unit; a viewer information collection unit obtaining the viewer information corresponding to the viewer terminal from a viewer master table storing information about viewers according to the instruction of the viewer terminal and storing the viewer information in a program viewer number table in relation to information about the TV program selected according to the instruction; a viewer information retrieval unit retrieving viewer information corresponding to a desired TV program from the program viewer number table according to the retrieval instruction of an external terminal; a retrieval result output unit outputting the viewer information retrieved by the viewer information retrieval unit to the external terminal; a bid reception unit receiving the bid for the desired program from the external terminal and storing the bid information in a bid information database and an auction unit holding an auction according to the bid information stored in the bid information database and selecting an external terminal bidding the highest price as the program's sponsor.

It is preferable for the auction program provider device of the present invention to further comprise a program collection unit collecting TV broadcasting programs from program provider terminals and storing the programs in a program database, a successful bid information notification unit notifying the external terminals and program provider terminals of information about winning external terminals.

According to another aspect of the present invention, the auction program provider device of the present invention also broadcasts a TV program through a first network and receives information from viewer terminals receiving the program through a second network. The device comprises a program collection unit collecting TV programs from program provider terminals providing TV programs and storing the programs in a program database; an aggregate program production unit producing an aggregated program displaying the respective pictures of a plurality of TV programs collected by the program collection unit on one screen in parallel; an aggregate program broadcasting unit broadcasting the aggregate program produced by the divided program production unit; a program selection unit selecting an arbitrary TV program from the plurality of TV programs according to the instruction of the viewer terminal; a program broadcasting unit broadcasting the TV program selected by the program selection unit; a viewer information collection unit obtaining viewer information corresponding to the viewer terminal from a viewer master table storing viewer information and storing the viewer information in a program viewer number table in relation to information about the TV program selected; a viewer information retrieval unit retrieving viewer information corresponding to a desired TV program from the program viewer number table according to the retrieval instruction to an external terminal; a retrieval result output unit outputting the viewer information retrieved by the viewer information retrieval unit to the external terminal; a bid reception unit receiving the bid for the desired TV broadcasting program from external terminals and a bid information output unit outputting the bid information received by the bid reception unit to the program provider terminal.

It is preferable for the auction program provider device to further comprise a successful bid information acquisition unit obtaining information about the winning external terminal of an auction held by the program provider terminal from the program provider terminal and a successful bid information notification unit notifying the external terminals of information about a winning external terminal obtained by the bid information acquisition unit.

The invention is defined in the attached independent claims. Preferred features may be found in the subclaims appended thereto.

Preferred embodiments of the present invention will now be described, by way of example only, with reference to the accompanying drawings, in which:
Fig. 1 shows the basic concept of embodiments of the present invention.
Fig. 2 is a flowchart (No. 1) showing the entire sponsor selection process.
Fig. 3 is a flowchart (No. 2) showing the entire sponsor selection process.
Fig. 4 shows the sponsor selection method (No. 1) of a sponsor selection auction system, including the auction program provider server of the present invention.
Fig. 5 shows the sponsor selection method (No. 2) of a sponsor selection auction system, including the auction program provider server according to embodiments of the present invention.
Fig. 6 shows the configuration of a system, including the auction program provider server according to embodiments of the present invention.
Fig. 7 shows an example data structure of the program information table.
Fig. 8 shows an example data structure of the viewer master.
Fig. 9 shows an example data structure of the program viewer number table.
Fig. 10 shows an example display screen of viewer information (viewer number per program).
Fig. 11 shows an example display screen of viewer information (viewer number per age).
Fig. 12 shows the configuration of the auction program provider server.
Fig. 13 shows the loading of the program according to embodiments of the present invention onto a computer.

The preferred embodiments of the present invention are described below with reference to the drawings.

Embodiments of the present invention adopt the following configuration in order to solve the problems described earlier.

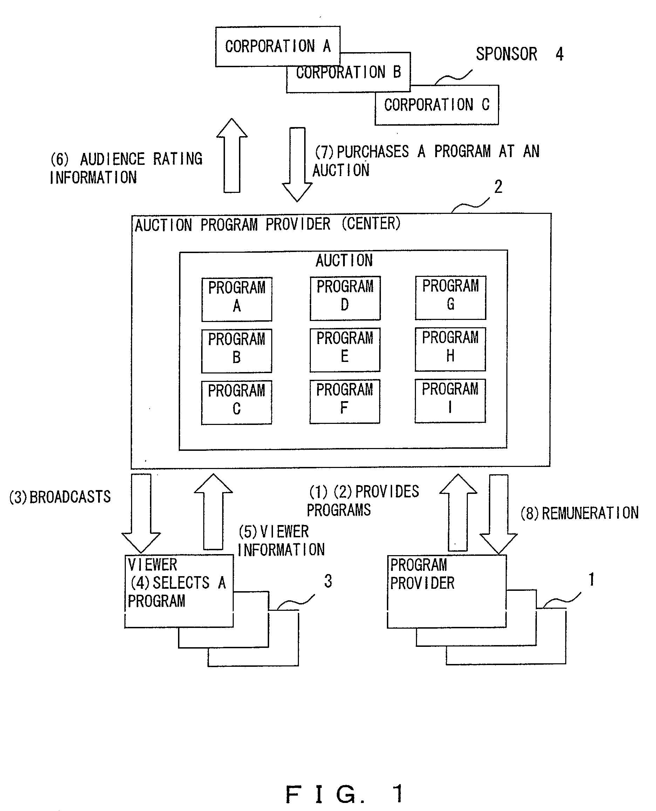

Fig. 1 shows the basic concept of embodiments of the present invention.

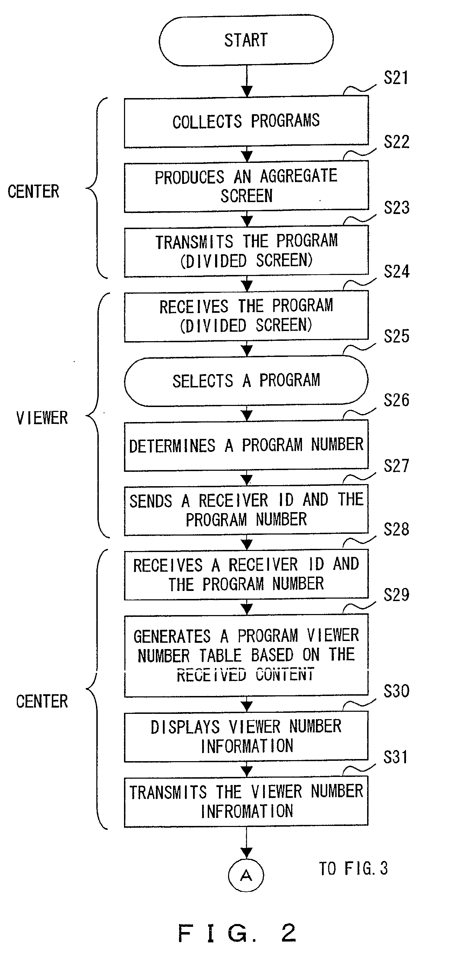

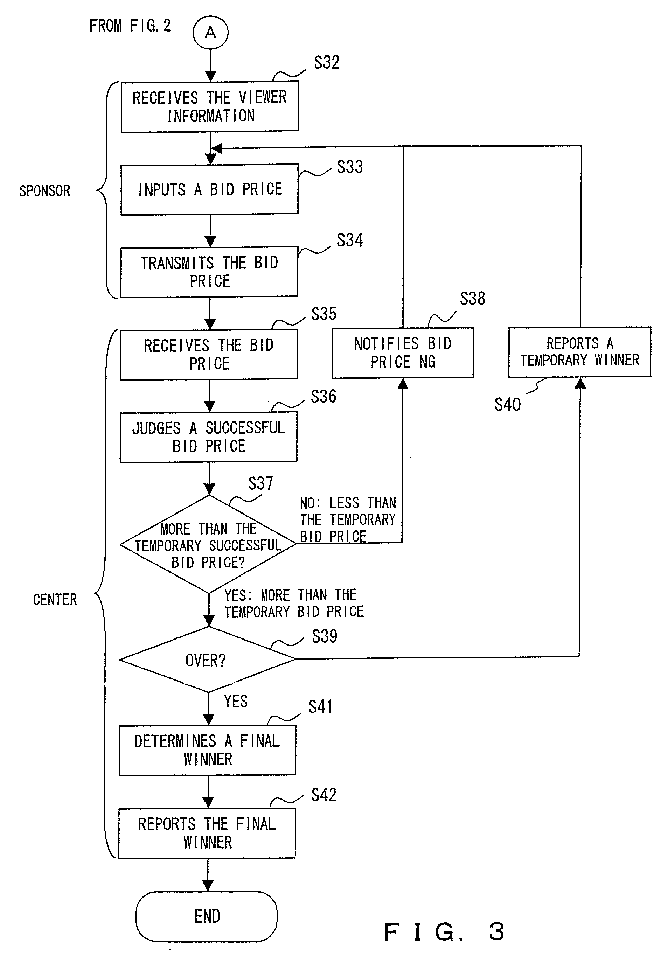

In Fig. 1, a program provider 1 is the producer (production company) producing TV programs. An auction program provider (center) 2 is a broadcasting station broadcasting programs produced (including one intermediated) by the program provider 1 or programs produced by the auction program provider 2 using an interactive TV system. A viewer 3 is an ordinary viewer having an interactive TV receiver receiving a program using an interactive TV system. A sponsor 4 is a corporation or the like partially paying for the production cost of a program in compensation for the broadcasting of its own company's commercials during the program.
(1) First, a program provider 1 transmits pictures and voice taken by a TV camera (including a cellular phone with a camera) to an auction program provider (center) 2 in real time as a broadcast program.
(2) Alternatively, a program provider 1 transmits a broadcast program produced in advance to an auction program provider (center) 2.
(3) Upon receipt of the broadcast programs (for example, programs A through I) from a plurality of program providers 1, the auction program provider 2 produces an "auction program" displaying the plurality of broadcasting programs on one screen in parallel and broadcasts the program using an interactive digital TV system.
(4) A viewer 3 selects and views a desired program from those displayed on a screen as a list (in parallel) .
(5) Then, information about which broadcast program is selected is transmitted to the center together with its viewer information.
(6) The auction program provider (center) 2 provides (publishes) information about which programs have high audience ratings in which age bracket, locality and gender to candidate sponsors 4 in real time.
(7) Each candidate sponsor 4 bids on a desired program at an auction held to determine a sponsor 4.
(8) The auction program provider (center) 2 subtracts a prescribed commission from the bid price paid by the winning sponsor and pays the balance to the program provider 1. Figs. 2 and 3 are flowcharts each showing a part of the entire sponsor determination process.

First, in step S21 shown in Fig. 2, programs produced by production companies or the auction program provider itself are collected.

In step S22, an aggregate (divided screen) displaying the programs collected in step S21 are produced.

In step S23, the programs collected in step S21 are displayed and broadcasted (a plurality of programs are transmitted as one channel) in the aggregate program produced in step S22.

These steps S21 through S23 are executed by an auction program provider (center) 2.

Then, in step S24, the viewer 3 (the TV receiver of the viewer 3) receives the program broadcast (the screen divided and displayed) in step S23 (a plurality of programs are displayed on one divided screen in parallel).

In step S25, a desired program is selected from the plurality of programs received in step S24 by touching a screen or by a remote control operation.

In step S26, an identification number (program number) specifying the program selected in step S25 is determined.

In step S27, the ID of the TV receiver (identifier for specifying a TV receiver) and the program number selected in step S26 are transmitted to the auction program provider (center) 2.

These steps S24 through S27 are executed by each viewer.

Then, in step S28, the ID of a TV receiver and program number that are transmitted by each viewer are received.

In step S29, a program viewer number table is generated using the TV receiver IDs and program numbers that are received in step S28, and viewer information stored in a viewer master.

In step S30, viewer number information is displayed based on the program viewer number table generated in step S29.

In step S31, the viewer number information displayed in step S30 is transmitted to candidate sponsors.

These steps S28 through S31 are executed by the auction program provider (center) 2.

In step S32 of Fig. 3, the viewer number information transmitted in step S31 is received.

In step S33, a desired broadcasting program is chosen according to the viewer number information received in step S32 and a bid price is input.

In step S34, the bid price input in step S33 is transmitted to the auction program provider (center) 2.

These steps S32 through S34 are executed by each candidate sponsor.

Then, in step S35, the bid prices in step S34 are received.

In step S36, a selection process is started to determine a bidder and a bid price.

In step S37, it is judged whether the bid price received in step S35 is greater than a prescribed temporary bid price.

If in step S37 it is judged that the bid price is less than the temporary bid price (no in step S37), then in step S38, the non-acceptance of the bid price (bid price NG) is notified to the candidate sponsor that has transmitted the bid price and the process returns to step S33.

If in step S37 it is judged that the bid price is greater than the temporary bid price (yes in step S37) , in step S39 it is judged whether the auction period is over.

If it is judged that the auction is not over (no in step S39), then in step S40 the candidate sponsor is notified that it is the temporary winner and the process returns to step S33.

If in step S39 it is judged that the auction is over (yes in step S39), in step S41 a final winner is determined. For example, of the candidate sponsors that have transmitted the bid prices received in step S35, the one with the highest bid price is selected as the final winner.

Then, in step S42, the winner and the production company are notified of who the winner is in step S41.

These steps S35 through S42 are executed by the auction program provider (center) 2.

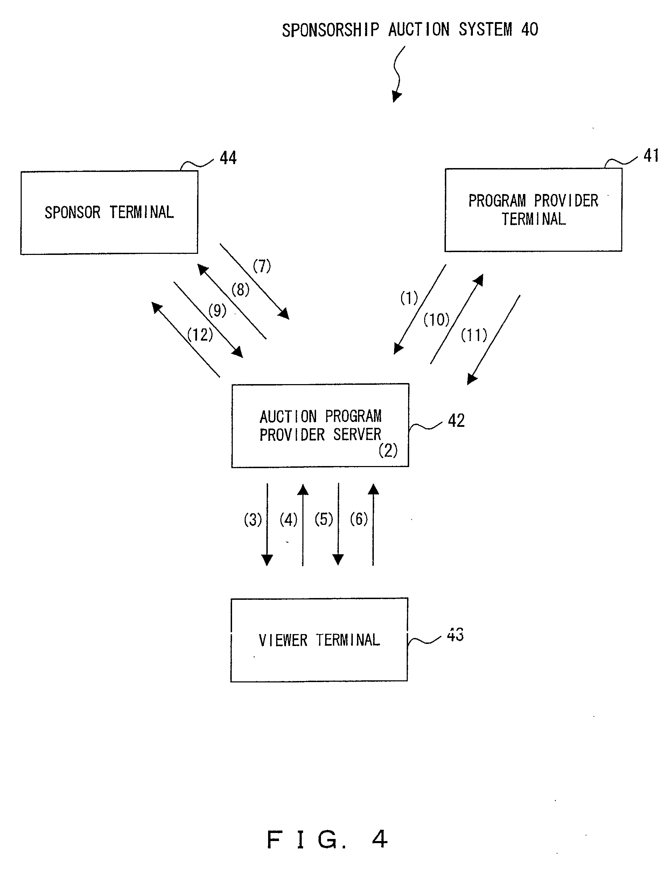

Fig. 4 shows the sponsor selection method (No. 1) of the sponsorship auction system, including an auction program provider server adopting the present invention.

In Fig. 4, a sponsor determination auction system 40 comprises program provider terminals 41, an auction program provider server 42, viewer terminals 43 and sponsor terminals 44.

The program provider terminals 41 are installed in production companies producing broadcast programs and the like, and the auction program provider server 42 is installed in a broadcasting station to broadcast the programs. The viewer terminals (interactive TV receiver) 43 are installed in viewers' homes, and the sponsor terminals 44 are installed in candidate sponsor corporations.

Then, the auction program provider server 42 can communicate with any of the program provider terminals 41, viewer terminals 43 and sponsor terminals 44.
(1) First, each program provider terminal 41 of a plurality of production companies transmits a program (including a commercial, a digest and the like) to the auction program provider server 42 (provides the auction program provider server 42 with a broadcasting program). A live program can also be transmitted by a portable terminal with a camera. If there are 100 cameras, 100 pictures can be collected as 100 broadcast programs.
(2) Then, upon receipt of these programs, the auction program provider server 42 generates a divided screen to display those broadcasting programs on one screen in parallel. In the above example, the 100 pictures are divided and displayed on 100 small thumbnail screens.
(3) Then, the programs are broadcast as an auction program. For example, the 100 collected pictures can also be broadcast as real-time programs.
(4) Upon receipt of the auction program, each viewer terminal 43 selects a desired program according to the viewer's selection instruction and transmits the selection to the auction program provider server 42 together with an identifier specifying the viewer terminal 43.
(5) Upon receipt of the program selection, the auction program provider server 42 broadcasts (transmits) the program (or its re-run (videotape)) to the viewer terminal 43 that has selected it. In the viewer terminal 43, the selected broadcasting program (obtained by a viewer clicking the small thumbnail screen) is enlarged to the entire screen.
(6) Each viewer terminal 43 also transmits its own viewer information to the auction program provider server 42 (provides the auction program provider server 42 with its own viewer information) . Then, the number of program viewers for each selected program is incremented, improving the audience rating.
(7) Then, the sponsor terminal 44 of each corporation that wants to become the sponsor of the program retrieves data from the auction program provider server 42 on condition that the target customers of the corporation should match the viewers of the program.
(8) The auction program provider server 42 transmits the retrieval result to the sponsor terminal 44.
(9) Upon receipt of the retrieval result, each sponsor terminal 44 notifies the auction program provider server 42 of its intention to bid for the matched broadcasting program, based on the audience rating information, such as audience rating per age, audience rating per locality and the like, of the viewers of the program.
(10) Upon receipt of the bid intention from the sponsor terminal 44, the auction program provider server 42 transmits information about the bidder (sponsor terminal 41 that has notified the auction program provider server 42 of its intention to bid), information about a bid price and the like, to the program provider terminal 41 that has provided the corresponding program.
(11) The program provider terminal 41 selects a final winner and transmits the result to the auction program provider 42.
(12) Upon receipt of the successful bid result, the auction program provider server 42 notifies the bidding sponsor terminals 44 of the successful bid result (specifically, notifies the winning sponsor terminal 44 of the win and the loser sponsor terminals 44 of the loss).

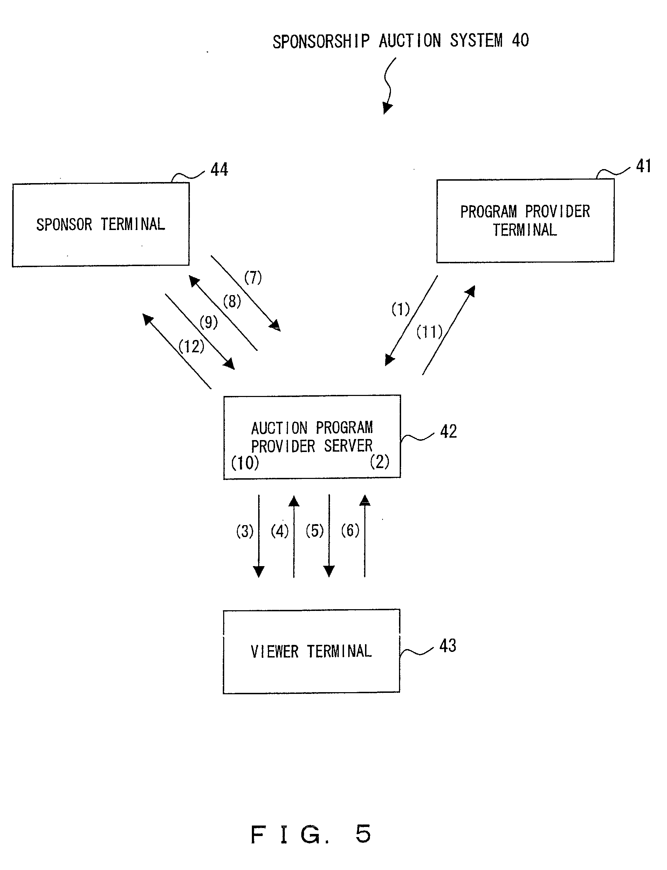

Fig. 5 shows the sponsor selection method (No. 2) of the sponsorship auction system, including an auction program provider server adopting the present invention.

As in the sponsorship auction system described with reference to Fig. 4, the program provider terminals 41 are installed in production companies and the like, and the auction program provider server 42 is installed in a broadcasting station. The viewer terminals 43 are installed in viewers' homes, and the sponsor terminals 44 are installed in corporations.

Since processes (1) through (9) and (12) are the same as those shown in Fig. 4, their descriptions are omitted. Therefore, only processes (10) and (11) are described below.
(10) Upon receipt of intention to bid from the sponsor terminal 44, the auction program provider server 42 determines a winner (sponsor terminal 41) on a prescribed condition (for example, on condition that, of the bid prices received during a prescribed time period, the highest bid price should win).
(11) After selecting the winner, the auction program provider server 42 notifies the program provider terminal 41 that has provided the corresponding broadcast program of the winner (transmits information about the winner to the program provider terminal 41 that has provided the corresponding broadcasting program).

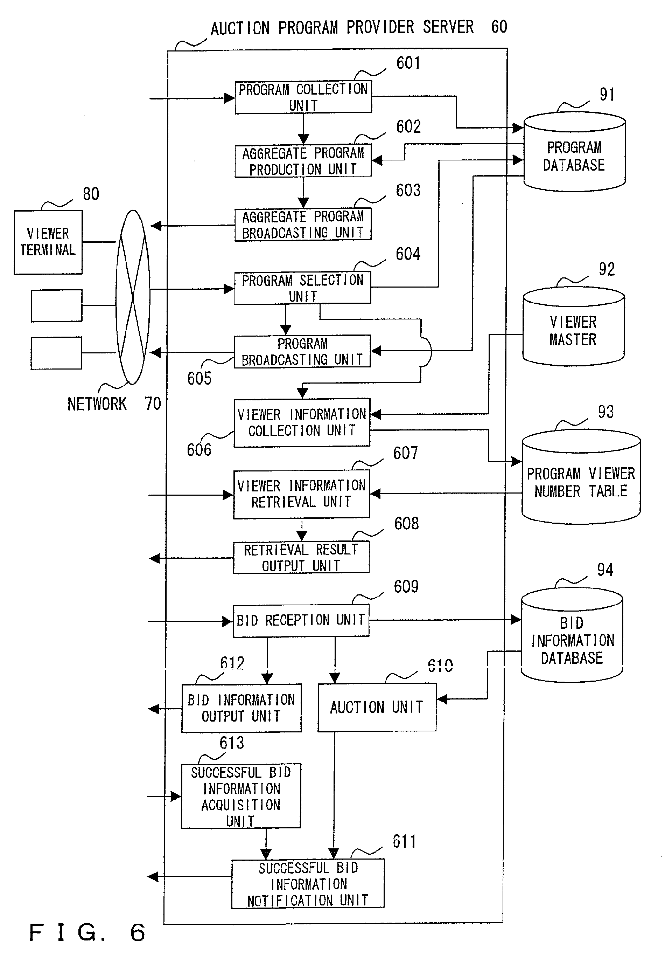

Fig. 6 shows the configuration of an entire system, including the auction program provider server adopting the present invention.

In Fig. 6, an auction program provider server 60 broadcasts a TV program through a network 70 (first network), such as a TV broadcasting communication network and the like, and receives information from viewer terminals that have received the TV program through a network (second network), such as a telephone line and the like. The server 60 comprises a program collection unit 601; an aggregate program production unit 602; an aggregate program broadcasting unit 603 ; a program selection unit 604; a program broadcasting unit 605; a viewer information collection unit 606; a viewer information retrieval unit 607; a retrieval result output unit 608; a bid reception unit 609; an auction unit 610; a successful bid information notification unit 611; a bid information output unit 612 and a successful bid information acquisition unit 613.

The program collection unit 601 collects TV programs from program provider terminals providing TV programs and stores the programs in a program database 91.

The aggregate program production unit 602 produces an aggregate program displaying the respective pictures of a plurality of TV programs stored in the program database 91 or collected by the program collection unit 601, on one screen in parallel.

The aggregate program broadcasting unit 603 broadcasts the divided program produced by the aggregate program production unit 602.

The program selection unit 604 selects an arbitrary TV program from the plurality of TV programs according to the instruction of the viewer terminal 80.

The program broadcasting unit 605 broadcasts the TV program selected by the program selection unit 604.

The viewer information collection unit 606 obtains viewer information corresponding to the viewer terminal 80 from a viewer master table 92 storing viewer information, and stores the viewer information in a program viewer number table 93 in relation to information about the TV program selected.

The viewer information retrieval unit 607 retrieves viewer information corresponding to a desired TV program from the program viewer number table 93 according to the retrieval instruction of an external terminal.

The retrieval result output unit 608 outputs the viewer information retrieved by the viewer information retrieval unit 607 to the external terminal.

The bid reception unit 609 receives a bid for the desired TV broadcasting program from the external terminal and stores the bid information in a bid information database 94.

The auction unit 610 holds an auction according to the bid information stored in the bid information database 94 and determines a winning external terminal.

The bid information output unit 612 outputs the bid information received by the bid reception unit 609, to the program provider terminal.

The successful bid information unit 613 obtains information about the winning external terminal at an auction held by the program provider terminal from the program provider terminal.

The successful bid information notification unit 611 notifies the external terminals and program provider terminals of the winning external terminal of the auction held by the auction unit 610. Alternatively, the unit 11 notifies the external terminal of the winning external terminal obtained by the successful bid information acquisition unit 613.

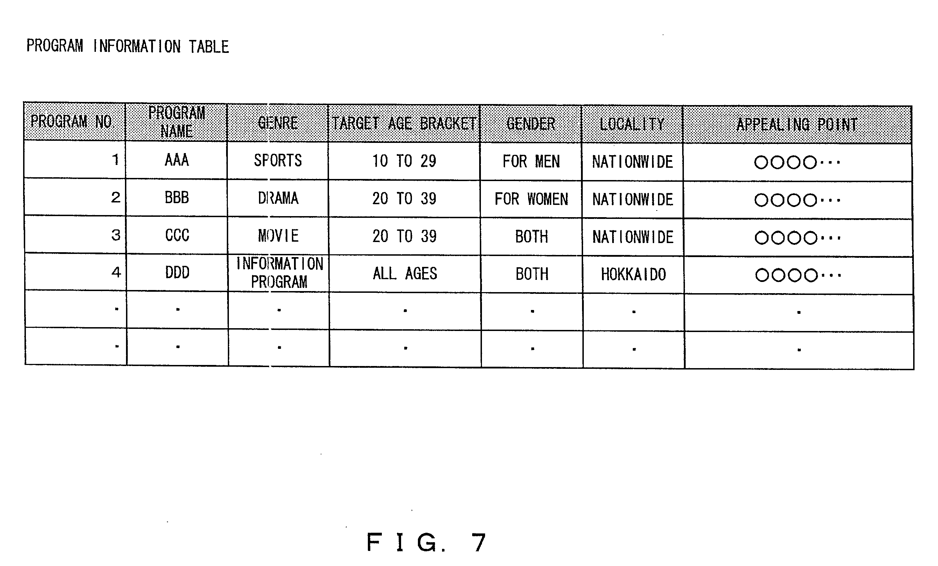

Fig. 7 shows an example data structure of the program information table.

In Fig. 7, the program information table includes as items, such as a "program number" uniquely attached to specify a program, a "program name" indicating the name of the program, a "genre" indicating the category of the program, a "target age" indicating the age of viewers targeted by a program, "gender" indicating the gender of viewers targeted by the program, a "locality" indicating a broadcasting area targeted by the program and an "appealing point" indicating any particular appealing point about the program.

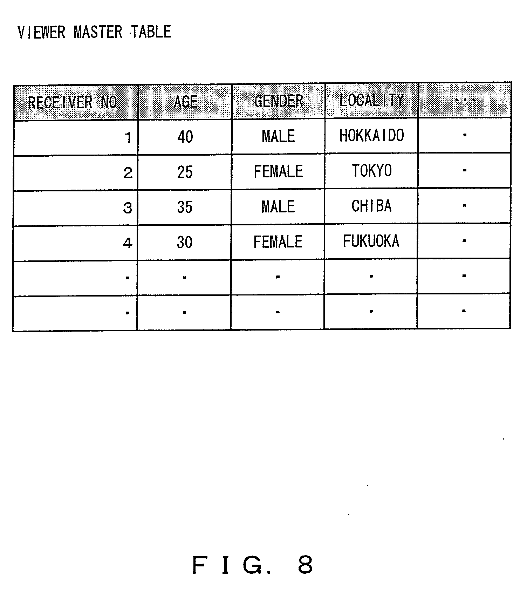

Fig. 8 shows an example data structure of the viewer master.

In Fig. 8, the viewer master includes items, such as a "receiver number" uniquely attached to specify the interactive TV terminal (receiver) of a viewer, an "age" indicating the age of a viewer, "gender" indicating the gender pf a viewer, a "locality" indicating the locality of a viewer (locality where a receiver is installed) and the like.

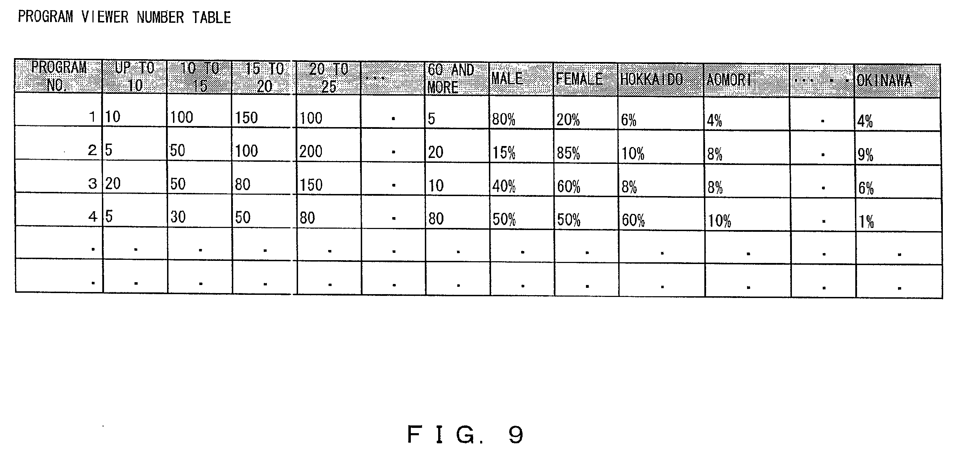

Fig. 9 shows an example data structure of the program viewer number table.

In Fig. 9, the program viewer number table includes items, such as a "program number" uniquely attached to specify a program, "up to 10", "10 to 15", ..., "60 and more" indicating an age bracket, "gender" indicating male or female, "Hokkaido", "Aomori", ..., "Okinawa" indicating the locality of a viewer (locality where a receiver is installed) and the like.

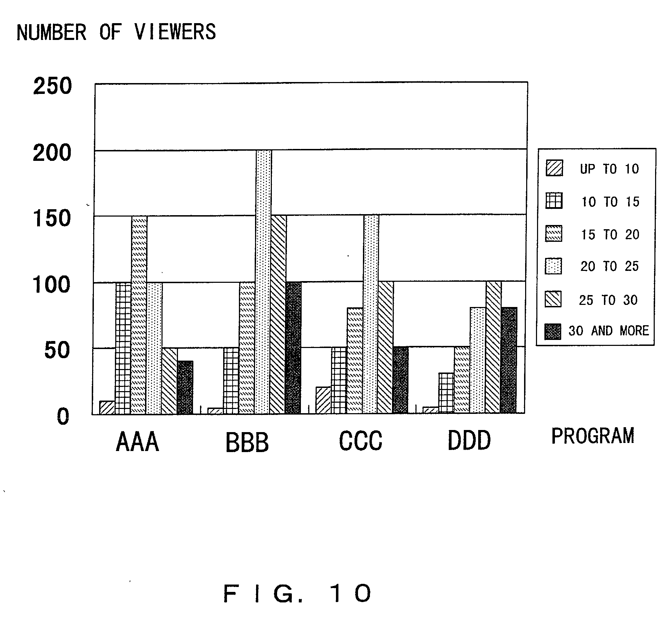

Fig. 10 shows an example display screen of information about the number of viewers (viewer number per program).

In Fig. 10, the respective numbers of viewers in the age brackets of "up to 10", "10 to 15", "15 to 20", "20 to 25", "25 to 30" "30 and more" for each program of "AAA", "BBB", "CCC" and "DDD" are displayed using a bar graph. For example, it is indicated that 150 viewers in an age bracket "15 to 20" view a program "AAA" .

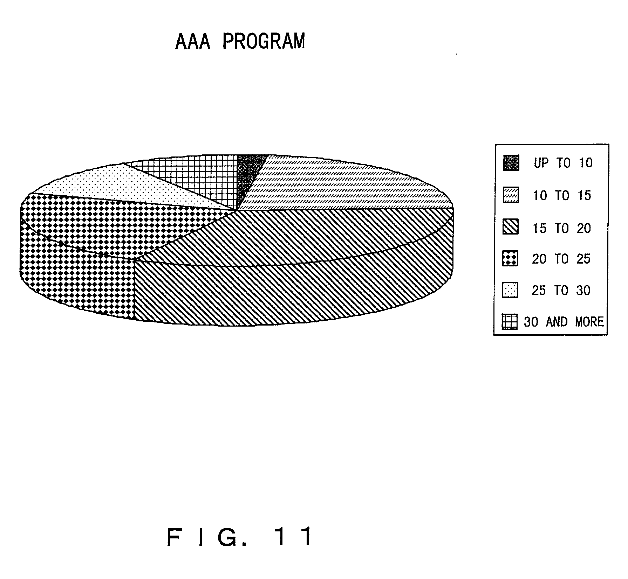

Fig. 11 shows an example display screen of information about the number of viewers (viewer number per age).

In Fig. 11, the respective numbers of viewers in the age brackets of "up to 10", "10 to 15", "15 to 20", "20 to 25", "25 to 30" "30 and more" for a program "AAA", "BBB" are displayed using a pie graph. For example, it is indicated that viewers in an age bracket "15 to 20" constitute the largest age bracket among the audience.

Although the preferred embodiments of the present invention have been described with reference to the drawings, the auction program provider server adopting the present invention is not limited to those preferred embodiments only if the function can be realized. The server can be a single device, a system composed of a plurality of devices or an integrated system, or a system for processing data through a network, such as LAN, WAN and the like.

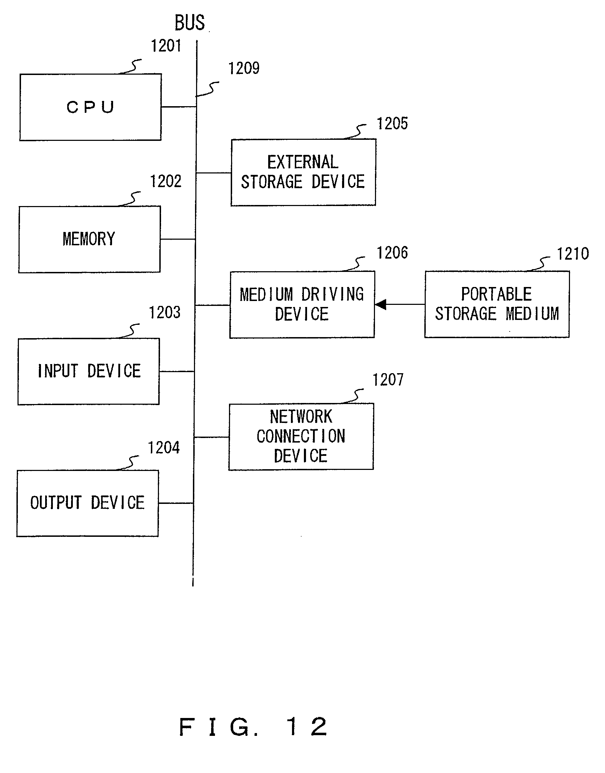

As shown in Fig. 12, the auction program provider server can be realized by a system comprising a CPU 1201, a memory, such as ROM and RAM, an input device 1203, an output device 1204, an external storage device 1205, a medium driving device 1206, a portable storage medium 1210 and a network connection device 1207, which are connected to the CPU by a bus 1209 except for the portable storage medium. Specifically, the function of the auction program provider server can be realized if the memory 1202, such as ROM and RAM, external storage device 1205 and portable storage medium 1210 that store a software program code for realizing the preferred embodiment system described above, are provided and if the computer of the auction program provider server reads and executes the program code.

In this case, the program code read from the portable storage medium 1210 and the like realizes the new function of the present invention. That means that the portable storage medium 1210 and the like storing the program code constitutes the present invention.

For the portable storage medium 1210 providing the program code, for example, a flexible disk, a hard disk, an optical disk, a magneto-optical disk, a CD-ROM, a CD-R, a DVD-ROM, a DVD-RAM, a magnetic tape, a non-volatile memory card, a ROM card, a variety of storage media storing data through the network connection device 1207 (that is, a communication line) , such as electronic mail, personal computer communication and the like can be used.

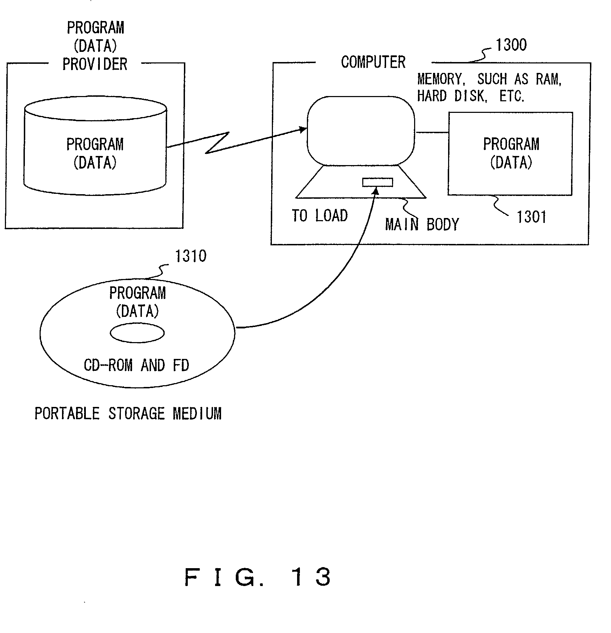

As shown in Fig. 13, the function of the preferred embodiment described above can be realized if a computer 1300 executes the program code read into the memory 1301. Alternatively, the function of the preferred embodiment described above can also be realized if an OS and the like running in the computer 1300 executes a part of the actual process or the entire actual process according to the instructions of the program code.

Alternatively, the function of the preferred embodiment described above can also be realized if, after the program code read from a portable storage medium 1310 or the program (data) provided by a program (data) provider are written into the memory 1301 inserted in a function extension board or provided for a function extension unit connected to the computer 1300, a CPU and the like provided for the function extension board or function extension unit can execute a part of the actual process or the entire actual process.

Specifically, the present invention is not limited to the preferred embodiments described above, and can take a variety of configurations or forms as long as the subject matter of the present invention is maintained.

As described above, according to the present invention, the provider of a broadcast program can reduce the difficulty of looking for a sponsor with known systems. Since a sponsor is determined after a broadcast is completed, the program provider can be released from producing a program that is restricted to the sponsor' s intention.

According to embodiments of the present invention, a sponsoring corporation can select a program that is frequently viewed by its target customers, by obtaining the viewer information of a broadcast program, and can reduce its investment risk accordingly.

A broadcasting station broadcasting an auction program can enjoy successful business. Specifically, since high remuneration is paid for a good (high audience rating) program, its production can also be enhanced. Since more funds can also be spent in the production of subsequent programs, a good program can be produced again, which is a good cycle.

## Claims

1. An auction program provider device (60) for broadcasting a TV program through a first network (70) and receiving information from viewer terminals (80) receiving the TV program through a second network (70) , comprising:
aggregate program production means (602) for producing an aggregate program displaying respective pictures of a plurality of TV programs on one screen in parallel;
aggregate program broadcasting means (603) for broadcasting the aggregate program produced by the aggregate program production means (602);
program selection means (604) for selecting an arbitrary TV program from the plurality of TV programs according to an instruction of the viewer terminal (80) ;
program broadcasting means (605) for broadcasting the TV program selected by the program selection means (604);
viewer information collection means (606) for obtaining viewer information corresponding to the viewer terminal (80) from a viewer master table (92) storing viewer information, and storing the viewer information in a program viewer number table (93) in relation to the information about the TV program selected according to the instruction;
viewer information retrieval means (607) for retrieving viewer information corresponding to a desired TV program from the program viewer number table (93) according to a retrieval instruction of an external terminal;
retrieval result output means (608) for outputting the viewer information retrieved by the viewer information retrieval means (607) to the external terminal;
bid reception means (609) for receiving a bid for the desired TV program from each external terminal and storing information about the received bids in a bid information database (94); and
auction means (610) for holding an auction according to the bid information stored in the bid information database (94) by the bid reception means (609).

2. The auction program provider device (60) according to claim 1, further comprising:
program collection means (601) for collecting TV programs from program provider terminals providing TV broadcasting programs and storing the programs in a program database (91); and
successful bid information notification means (611) for notifying the external terminals and program provider terminals of a winning external terminal of an auction held by the auction means (610).

3. An auction program provider device (60) for broadcasting a TV program through a first network (70) and receiving information from viewer terminals (80) receiving the TV program through a second network (70), comprising:
program collection means (601) for collecting TV programs from program provider terminals providing TV programs;
aggregate program production means (602) for producing an aggregate program displaying respective pictures of a plurality of TV broadcasting programs collected by the program collection means (601) on one screen in parallel;
aggregate program broadcasting means (603) for broadcasting the aggregate program produced by the aggregate program production means (602);
program selection means (604) for selecting an arbitrary TV program from the plurality of TV programs according to an instruction of the viewer terminal (80) ;
program broadcasting means (605) for broadcasting the TV program selected by the program selection means (604);
viewer information collection means (606) for obtaining viewer information corresponding to the viewer terminal (80) from a viewer master table (92) storing viewer information and storing the information in a program viewer number table (93) in relation to information about the TV program selected according to the instruction;
viewer information retrieval means (607) for retrieving viewer information corresponding to a desired TV program from the program viewer number table (93) according to a retrieval instruction of an external terminal;
retrieval result output means (608) for outputting the viewer information retrieved by the viewer information retrieval means (607) to the external terminal;
bid reception means (609) for receiving a bid for the desired TV program from each external terminal; and
bid information output means (612) for outputting information about the bids received by the bid reception means (609) to the program provider terminal.

4. The auction program provider device (60) according to claim 3, further comprising:
successful bid information acquisition means ( 613) for obtaining information about a winning external terminal of an auction held by the program provider terminal from the program provider terminal; and
successful bid information notification means (611) for notifying the external terminal of the winning external terminal obtained by the successful bid information acquisition means (613).

5. A sponsor determination method using an auction program provider device (60) for broadcasting a TV program through a first network (70) and receiving information from viewer terminals (80) receiving the TV program through a second network (70), comprising:
producing an aggregate program displaying respective pictures of a plurality of collected TV programs on one screen in parallel;
broadcasting the produced aggregate program;
selecting an arbitrary TV program from the plurality of TV programs according to an instruction of the viewer terminal (80) ;
broadcasting the selected TV program to the viewer terminal (80) ;
obtaining viewer information corresponding to the viewer terminal (80) from a viewer master table (92) storing viewer information, and storing the viewer information in a program viewer number table (93) in relation to information about the TV program selected according to the instruction;
retrieving viewer information corresponding to a desired TV program from the program viewer number table (93) according to a retrieval instruction of an external terminal;
outputting the retrieved viewer information to the external terminal;
' receiving bids for the desired TV program from the external terminals and storing information about the received bids in a bid information database (94); and
holding an auction according to the bid information stored in the bid information database (94) and selecting a winning external terminal.

6. The sponsor determination method according to claim 5, further comprising:
collecting TV programs from program provider terminals providing TV broadcasting programs and storing the programs in a program database (91); and
notifying the external terminals and program provider terminals of the winning external terminal of an auction.

7. A sponsor selection method using an auction program provider device (60) for broadcasting a TV program through a first network (70) and receiving information from viewer terminals (80) receiving the TV program through a second network (70), comprising:
collecting TV programs from program provider terminals providing TV programs;
producing an aggregate program displaying respective pictures of a plurality of collected TV programs on one screen in parallel;
broadcasting the produced aggregate program;
selecting an arbitrary TV program from the plurality of TV programs according to an instruction of the viewer terminal (80);
broadcasting the selected TV program;
obtaining viewer information corresponding to the viewer terminal (80) from a viewer master table (92) storing viewer information and storing the information in a program viewer number table (93) in relation to the information about the TV program selected according to the instruction;
retrieving viewer information corresponding to a desired TV program from the program viewer number table (93) according to a retrieval instruction of an external terminal;
outputting the retrieved viewer information to the external terminal;
receiving a bid for the desired TV program from each external terminal; and
outputting bid information about the received bids to the program provider terminal.

8. The sponsor selection method according to claim 7, further comprising:
obtaining information about a winning external terminal at an auction held by the program provider terminal; and
notifying the external terminals of the obtained winning external terminal.

9. A sponsor selection program of an auction program provider device (60) for broadcasting a TV program through a first network (70) and receiving information from viewer terminals (80) receiving the TV program through a second network (70), enabling a computer (1300) to execute a process, the process comprising:
producing an aggregate program displaying respective pictures of a plurality of collected TV programs on one screen in parallel;
broadcasting the produced aggregate program;
selecting an arbitrary TV program from the plurality of TV programs according to an instruction of the viewer terminal (80);
broadcasting the selected TV program to the viewer terminal (80);
obtaining viewer information corresponding to the viewer terminal (80) from a viewer master table (92) storing viewer and storing the viewer information in a program viewer number table (93) in relation to the information about the TV program selected according to the instruction;
retrieving viewer information corresponding to a desired TV program from the program viewer number table (93) according to a retrieval instruction of an external terminal;
outputting the retrieved viewer information to the external terminal;
receiving a bid for the desired TV program from each external terminal and storing information about the received bids in a bid information database (94); and
holding an auction according to the information stored in the bid information database (94) and selecting a winning external terminal.

10. The sponsor selection program according to claim 9, the process further comprising:
collecting TV programs from program provider terminals providing TV programs and storing the programs in a program database (91); and
notifying the external terminals and program provider terminals of the winning external terminal of an auction.

11. A sponsor selection program of the auction program provider device (60) for broadcasting a TV program through a first network (70) and receiving information from viewer terminals (80) receiving the TV program through a second network (70), enabling a computer (1300) to execute a process, the process comprising:
collecting TV programs from program provider terminals providing TV programs;
producing an aggregate program displaying respective pictures of a plurality of collected TV programs on one screen in parallel;
broadcasting the produced aggregate program;
selecting an arbitrary TV program from the plurality of TV programs according to an instruction of the viewer terminal (80);
broadcasting the selected TV program;
obtaining viewer information corresponding to the viewer terminal (80) from a viewer master table (92) storing viewer information and storing the information in a program viewer number table (93) in relation to information about the TV program selected according to the instruction;
retrieving viewer information corresponding to a desired TV program from the program viewer number table (93) according to a retrieval instruction of an external terminal;
outputting the retrieved viewer information to the external terminal;
receiving a bid for the desired TV program from each external terminal; and
outputting information about the received bids to the program provider terminal.

12. The sponsor selection program according to claim 11, further comprising:
obtaining information about a winning external terminal at an auction held by the program provider terminal; and
notifying the external terminals of the obtained winning external terminal.
